# EUROPÄISCHE PATENTANMELDUNG

(11) **EP 3 670 571 A1**
(43) Veröffentlichungstag der Anmeldung: **24.06.2020**
(21) Anmeldenummer: 18215182.9
(22) Anmeldetag: 21.12.2018
(51) Int. Cl.: C08G 63/66

(54) **VERFAHREN ZUR HERSTELLUNG EINES POLYESTER-POLYETHERPOLYOL-BLOCKCOPOLYMERS**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der Erfindung ist ein Verfahren zur Herstellung eines Polyester-Polyetherpolyol-Blockcopolymers durch die Umsetzung einer H-funktionellen Startersubstanz mit Lacton in Gegenwart eines Katalysators zu einem Polyester gefolgt von der Umsetzung des Polyesters aus Schritt i) mit Alkylenoxiden in Gegenwart eines Katalysators (B). Ein weiterer Gegenstand ist auch der Polyester-Polyetherpolyol-Blockcopolymers erhältlich nach dem vorliegendem Verfahren.

## Beschreibung

Gegenstand der Erfindung ist ein Verfahren zur Herstellung eines Polyester-Polyetherpolyol-Blockcopolymers durch die Umsetzung einer H-funktionellen Startersubstanz mit Lacton in Gegenwart eines Katalysators zu einem Polyester gefolgt von der Umsetzung des Polyesters aus Schritt i) mit Alkylenoxiden in Gegenwart eines Katalysators (B). Ein weiterer Gegenstand ist auch der Polyester-Polyetherpolyol-Blockcopolymers erhältlich nach dem vorliegendem Verfahren.

WO 2011/000560 A1 offenbart ein Verfahren zur Herstellung von Polyetheresterpolyolen mit primären Hydroxyl-Endgruppen, umfassend die Schritte der Reaktion einer aktive Wasserstoffatome aufweisenden Starterverbindung mit einem Epoxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nicht-zyklische, identisch substituierte tertiäre Amine ausgenommen sind. Die resultieren Polyetheresterpolyole dieses mehrstufigen Verfahrens weisen einen primären Hydroxylgruppenanteil von maxinmal 76 % auf.

In WO2008/104723 A1 wird ein Verfahren zur Herstellung eines Polylactons oder Polylactams offenbart, bei dem das Lacton oder Lactam mit einer H-funktionellen Startersubstanz in Gegenwart eines nicht-chlorierten, aromatischen Lösungsmittels und einer Sulfonsäure im Mikroliter-Maßstab umgesetzt wird. Hierbei werden als H-funktionelle Startersubstanz niedermolekulare monofunktionelle oder polyfunktionelle Alkohole oder Thiole verwendet, wobei in den Ausführungsbeispielen (monofunktionelles) n-Pentanol, mit ε-Caprolacton oder δ-Valerolacton in Gegenwart von hohen Mengen an Trifluormethansulfonsäure von 2.5 mol-% oder mehr offenbart ist.

In Couffin et al. Poly. Chem 2014, 5, 161 wird eine selektive O-Acyl Öffnung von β-Butyrolacton an H-funktionelle Startersubstanzen wie beispielsweise n-Pentanol, 1,4-Butandiol und Polyethylenglycol in deuteriertem Benzol und in Gegenwart von Trifluormethansulfonsäure im batch-Modus offenbart. Hierbei werden die Umsetzungen im Mikroliter-Maßstab durchgeführt und dabei hohe Mengen des Säurekatalysators von 2.5 mol-% oder mehr bezogen auf die Menge an eingesetztem Lacton verwendet.

In GB1201909 wird ebenfalls ein Verfahren zur Herstellung von Polyester durch Umsetzung eines Lactons mit einer H-funktionellen Starterverbindung in Gegenwart einer organischen Carbon- oder Sulfonsäure, deren PKs-Wert bei 25 °C kleiner als 2.0 ist. Hierbei wurden alle Reaktionskomponenten wie kurzkettige Alkohole sowie epsilon-Caprolacton oder Mischungen aus isomeren Methyl-epsilon-Caprolacton in hohen Mengen an Trichlor- oder Trifluoressigsäurekatalysator vorgelegt und im batch-Verfahren für mindestens 20h umgesetzt, wobei Feststoffe oder flüssige Produkt mit einer breiten Molmassenverteilung resultierten.

In US5032671 wird ein Verfahren zur Herstellung von polymeren Lactonen durch Umsetzung einer H-funktionellen Startersubstanz und Lactonen in Gegenwart eines Doppelmetallcyanid-(DMC)-Katalysators offenbart. In den Ausführungsbeispielen werden hierbei die Umsetzung von Polyetherpolyolen mit ε-Caprolacton, δ-Valerolacton oder β-Propiolacton zu Polyether-Polyesterpolyol Blockcopolymeren offenbart, wobei diese Reaktionen in Gegenwart hoher Mengen von 980 ppm bis 1000 ppm des Cobalt-haltigen DMC-Katalysators und in Gegenwart von organischen Lösungsmitteln durchgeführt wird, wobei die resultierenden Produkte eine breite Molmassenverteilung von 1.32 bis 1.72 aufweisen. Für die Umsetzung des Polyetherpolyols basierend auf einem trifunktionellen Triol-Starter mit β-Propiolacton zum Polyester-Polyetherpolyol-Blockcopolyme wird lediglich die Bildung des resultierenden Produktes mit einer Molmasse von 10000 g/mol postuliert. Zudem ist in diesem Verfahren ein Aufarbeitungsschritt notwendig, bei dem die Produkte über Diatomeenerde filtriert und anschließend das Lösungsmittel entfernt wird.

Ausgehend vom Stand der Technik war es Aufgabe der vorliegenden Erfindung das Herstellungsverfahren von Polyestern hinsichtlich der Bildung eines definierten, reproduzierbaren Reaktionsproduktes unter Einbau aller Reaktionskomponenten zu verbessern und zu vereinfachen, wobei die resultierenden Polyester-Produkte neben Hydroxylendgruppen eine verbesserte thermische Stabilität aufweisen, damit diese direkt in der Umsetzung mit Isocyanaten in der exothermen Polyurethan Reaktion verwendet werden können.

Überraschend wurde gefunden, dass die erfindungsgemäße Aufgabe gelöst wird durch ein Verfahren zur Herstellung eines Polyester-Polyetherpolyol-Blockcopolymers, umfassend folgende Schritte:
i) Umsetzen einer H-funktionellen Startersubstanz mit Lacton zu einem Polyester
ii) Umsetzen des Polyesters aus Schritt i) mit Alkylenoxiden in Gegenwart eines Katalysators (B).

Hierbei ist unter dem erfindungsgemäßen Polyester-Polyetherpolyol-Blockcopolymer ein Blockcopolymer bestehend aus einem inneren Block (A), bevorzugt Polyester Block (A) welcher im 1. Verfahrensschritt gebildet wird und einen, daran chemisch gebundenen äußeren in Schritt ii) gebildeten Block (B) bevorzugt Polyetherpolyol Block (B). Im Falle eines inneren Polyester Blocks (A) mit zwei terminalen Carboxygruppen erfolgt in Schritt ii) die Umsetzung beider Carboxygruppen mit Alkylenoxiden unter Bildung von zwei äußeren terminalen Polyetherpolyol-Blöcken (B), so dass sich eine (B)-(A)-(B) Struktur ausgebildet wird.

Im Falle eines Polyester Blocks (A) mit zwei terminalen Hydroxygruppen erfolgt in Schritt ii) die Umsetzung beider Hydroxygruppen mit Alkylenoxiden unter Bildung von zwei äußeren terminalen Polyetherpolyol-Blöcken (B), so dass eine (B)-(A)-(B) Struktur ausgebildet wird.

Der innere Block (A) kann auch für sich eine Blockcopolymer Struktur aufweisen beispielsweise durch Umsetzung von Hydroxy- und oder Carboxygruppen terminierte Polyestern, Polycarbonaten, Polyethercarbonaten, Polyetherestercarbonatpolyolen und Polyethern (Block A') mit Lactonen (Polyester A")unter Bildung einer (A")-(A')-(A") Struktur.

### H-funktionelle Startersubstanz

In einer Ausführungsform des erfindungsgemäßen Verfahrens umfasst die H-funktionelle Startersubstanz eine H-funktionelle Starterverbindung mit einer oder mehreren freien Carboxygruppe(n) und/oder funktionelle Starterverbindung mit einer oder mehreren freien Hydroxylgruppe(n) bevorzugt eine H-funktionelle Starterverbindung mit einer oder mehreren freien Carboxygruppe(n).

In einer Ausführungsform des erfindungsgemäßen Verfahrens wird eine H-funktionelle Verbindung verwendet, wobei die H-funktionelle Verbindung eine oder mehrere Hydroxylgruppe(n), bevorzugt 1 bis 8 und besonders bevorzugt 2 bis 6 aufweist.

H-funktionelle Verbindung mit einer Hydroxylgruppe können C1 bis C20 Alkohole wie beispielsweise Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, Dodecanol, Tetradecanol, Hexadecanol und Octadecanol verwendet werden.

Als H-funktionelle Verbindung mit mehreren Hydroxylgruppen eignen sich mehrwertige C1 bis C20 Alkohole wie beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen mit mehreren Hydroxylgruppen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen mit mehreren Hydroxylgruppen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.
Des Weiteren können als H-funktionelle Startersubstanzen mit mehreren Hydroxylgruppen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.
In einer weiteren Ausführungsform der Erfindung können Polyethercarbonatpolyole und/oder Polyetherestercarbonatpolyole als H-funktionelle Startersubstanzen mit mehreren Hydroxylgruppen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

In einer bevorzugten Ausführungsform des erfindungsgemäßen Verfahrens wird eine H-funktionelle Verbindung verwendet, wobei die H-funktionelle Verbindung eine oder mehrere Carboxygruppe(n), bevorzugt 1 bis 8 und besonders bevorzugt 2 bis 6 aufweist.

In einer Ausführungsform des erfindungsgemäßen Verfahrens weist die H-funktionelle Verbindung mit einer oder mehreren Carboxygruppe(n) keine freien primären und/sekundäre Hydroxylgruppen auf.

In einer bevorzugten Ausführungsform des erfindungsgemäßen Verfahrens ist die H-funktionelle Startersubstanz mit einer oder mehreren freien Carboxygruppe(n) eine oder mehrere Verbindung(en) und wird ausgewählt aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

Als einwertige Carbonsäuren eignen sich einwertige C1 bis C20-Carbonsäuren wie beispielsweise Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure Acrylsäure und Methacrylsäure.

Als mehrwertige Carbonsäuren eignen sich mehrwertige C1 bis C20-Carbonsäuren wie beispielsweise Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Die H-funktionellen Startersubstanzen können auch aus der Substanzklasse der Carboxygruppe(n) terminierten Polyester ausgewählt sein, insbesondere solchen mit einem Molekulargewicht Mn im Bereich von 50 bis 4500 g/mol. Als Polyester können mindestens difunktionelle Polyester eingesetzt werden. Bevorzugt bestehen Polyester aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydro-phthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Die resultierenden Polyester weisen hierbei terminale Carboxygruppen auf.

Bevorzugt werden Carboxygruppe(n) terminierte Polycarbonate beispielsweise durch Umsetzung von Polycarbonatpolyolen, bevorzugt Polycarbonatdiolen mit mit stöchiometrischer Zugabe oder stöchiometrischen Überschuss, bevorzugt stöchiometrischen Überschuss an mehrwertigen Carbonsäuren und/oder cyclischen Anhydriden erhalten.

Die Polycarbonatdiole weisen insbesondere ein Molekulargewicht Mn im Bereich von 1000 bis 4500 g/mol, vorzugsweise 1500 bis 2500 g/mol auf wobei die Polycarbonatdiole beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200. Cyclische Anhydride sind beispielsweise Bernsteinsäureanhydrid, Methylbernsteinsäureanhdrid, Maleinsäureanhdrid, Phthalsäureanhydrid, Tetrahydrophthalsäureanhydrid und Hexahydro-phthalsäureanhydrid.

Bevorzugt werden Carboxygruppe(n) terminierte Polyethercarbonate und/oder Polyetherestercarbonate beispielsweise durch Umsetzung von Polyethercarbonatpolyolen und/oder Polyetherestercarbonatpolyolen mit stöchiometrischer Zugabe oder stöchiometrischen Überschuss, bevorzugt stöchiometrischen Überschuss an mehrwertigen Carbonsäuren und/oder cyclischen Anhydriden erhalten. Die Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden. Cyclische Anhydride sind beispielsweise Bernsteinsäureanhydrid, Methylbernsteinsäureanhdrid, Maleinsäureanhdrid, Phthalsäureanhydrid, Tetrahydrophthalsäureanhydrid und Hexahydro-phthalsäureanhydrid.

Bevorzugt werden Carboxygruppe(n) terminierte Polyether beispielsweise durch Umsetzung von Polyetherpolyolen mit stöchiometrischer Zugabe oder stöchiometrischen Überschuss, bevorzugt stöchiometrischen Überschuss an mehrwertigen Carbonsäuren und/oder cyclischen Anhydriden erhalten. Die Polyetherpolyole, die aus sich wiederholenden Ethylenoxid- und Propylenoxideinheiten aufgebaut sind, bevorzugt mit einem Anteil von 50 bis 100% Propylenoxideinheiten, besonders bevorzugt mit einem Anteil von 80 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE. Cyclische Anhydride sind beispielsweise Maleinsäureanhdrid, Bernsteinsäureanhydrid, Methylbernsteinsäureanhydrid, Phthalsäureanhydrid, Tetrahydrophthalsäureanhydrid und Hexahydro-phthalsäureanhydrid.

In einer Ausführungsform des erfindungsgemäßen Verfahrens ist die H-funktionelle Startersubstanz mit einer oder mehreren freien Carboxygruppe(n) eine oder mehrere Verbindung(en) und wird ausgewählt aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure.

Unter Lactonen sind gemäß des technisch-allgemeingültigen Verständnis in der organischen Chemie heterocyclische Verbindungen zu verstehen, wobei Lactone durch intramolekulare Versterung, d.h. der Umsetzung eines Hydroxyfunktionalität mit einer Carboxyfunktionalität einer Hydroxycarbonsäuren, gebildet werden. Es handelt sich somit um cyclische Ester mit einem Ringsauerstoff.

In einer Ausführungsform des erfindungsgemäßen Verfahrens ist das Lacon ein 4-gliedriges Ringlacton, 5-gliedriges Ringlacton, 6-gliedrigen Ringlacton, 7-gliedriges Ringlacton und/oder höhergliedriges Ringlacton bevorzugt ein 4-gliedriges Ringlacton.

In einer Ausführungsform des erfindungsgemäßen Verfahrens ist das Lacton ein 4-gliedriges Ringlacton, wobei das 4-gliedrige Ringlacton eine oder mehrere Verbindung(en) ist und ausgewählt wird aus der Gruppe bestehend aus Propiolacton, β-Butyrolacton, Diketen bevorzugt Propiolacton und β-Butyrolacton.

In einer Ausführungsform des erfindungsgemäßen Verfahrens wird Schritt i) in Gegenwart des Katalysators (A) durchgeführt.

In einer bevorzugten Ausführungsform des erfindungsgemäßen Verfahrens ist der in Schritt i) verwendete Katalysator (A) ein Amin (A), ein Doppelmetallcyanid (DMC)-Katalysator (A) oder ein Brönsted-saurer Katalysator (A) bevorzugt ein Doppelmetallcyanid (DMC)-Katalysator (A).

In einer Ausführungsform des erfindungsgemäßen Verfahrens ist der Katalysator (A) ein Amin (A), wobei das tertiäres Amin (A) mindestens eine Verbindung ist ausgewählt aus mindestens einer Gruppe bestehend aus:
(A) Amine der allgemeinen Formel (2): 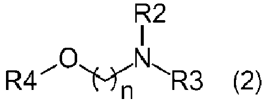 wobei gilt:
   R2 und R3 sind unabhängig voneinander Wasserstoff, Alkyl oder Aryl; oder
   R2 und R3 bilden gemeinsam mit dem sie tragenden N-Atom einen aliphatischen, ungesättigten oder aromatischen Heterozyklus;
   n ist eine ganze Zahl von 1 bis 10;
   R4 ist Wasserstoff, Alkyl oder Aryl; oder
   R4 steht für -(CH2)x-N(R41)(R42), wobei gilt:
      R41 und R42 sind unabhängig voneinander Wasserstoff, Alkyl oder Aryl; oder
      R41 und R42 bilden gemeinsam mit dem sie tragenden N-Atom einen aliphatischen, ungesättigten oder aromatischen Heterozyklus;
      x ist eine ganze Zahl von 1 bis 10;
(B) Amine der allgemeinen Formel (3): 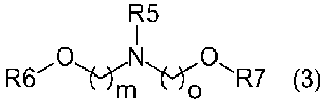 wobei gilt:
   R5 ist Wasserstoff, Alkyl oder Aryl;
   R6 und R7 sind unabhängig voneinander Wasserstoff, Alkyl oder Aryl;
   m und o sind unabhängig voneinander eine ganze Zahl von 1 bis 10;
   und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

In einer Ausführungsform des erfindungsgemäßen Verfahrens ist der der Katalysator (A) ein Doppelmetallcyanid (DMC) - Katalysator (A).

Die in dem erfindungsgemäßen Verfahren vorzugsweise einsetzbaren DMC-Katalysatoren enthalten Doppelmetallcyanid-Verbindungen, die die Reaktionsprodukte wasserlöslicher Metallsalze und wasserlöslicher Metallcyanidsalze sind.
Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.
Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (1.) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.
Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.
Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.
Zur Herstellung der Doppelmetallcyanid-Verbindungen geeignete Metallsalze weisen bevorzugt eine Zusammensetzung nach der allgemeinen Formel (I) auf,

M(X)n (I),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (II) auf,

Mr(X)3 (II),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (III) auf,

M(X)s (III),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

M(X)t (IV),

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.
Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (V) auf

(Y)a M'(CN)b (A)c (V),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.
Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VI)

Mx[M'x,(CN)y]z (VI),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.
Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).
Beispiele geeigneter Doppelmetallcyanid-Verbindungen (VI) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanocobaltat(III) verwendet werden. Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert-butylether und 3-Methyl-3-oxetan-methanol.
Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.
Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.
Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.
Im zweiten Schritt kann die Isolierung des Feststoffs (d.h. die Vorstufe des Katalysators) aus der Suspension durch bekannte Techniken, wie Zentrifugation oder Filtration, erfolgen.
In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.
Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.
Außerdem ist es vorteilhaft, den isolierten Feststoff mehr als einmal zu waschen. Vorzugsweise wird in einem ersten Waschschritt mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des organischen Komplexliganden in der wässrigen Waschlösung zwischen 40 und 80 Gew.%, bezogen auf die Gesamtlösung des ersten Waschschritts. In den weiteren Waschschritten wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden und weiterer komplexbildender Komponente (bevorzugt im Bereich zwischen 0,5 und 5 Gew.%, bezogen auf die Gesamtmenge der Waschlösung des Schrittes, als Waschlösung eingesetzt und der Feststoff damit einmal oder mehrmals, vorzugsweise einmal bis dreimal gewaschen.
Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.
Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.
In einer bevorzugten Ausführungsform des erfindungsgemäßen Verfahrens umfasst der Doppelmetallcyanid Katalysator (A) einen organischen Komplexliganden, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol

In einer Ausführungsform des erfindungsgemäßen Verfahrens wird der Doppelmetallcyanid (DMC) - Katalysator in einer Menge von 20 ppm bis 5000 ppm, bevorzugt 50 ppm bis 4000 ppm bezogen auf den gebildeten Polyester eingesetzt.

### Brönsted-saurer Katalysator (A)

In einer weiteren Ausführungsform des erfindungsgemäßen Verfahrens ist der Katalysator (A) eine Brönsted-Säure (Brönsted-saurer Katalysator (A)).

Gemäß der gängigen, fachlichen Definition sind unter Brönsted-Säuren Stoffe zu verstehen, welche Protonen an einen zweiten Reaktionspartner, die sogenannte Brönsted-Base typischerweise im wässrigen Medium bei 25 °C übertragen können. Im Sinne der vorliegenden Erfindung bezeichnet der Begriff des Brönsted-sauren Katalysators eine nicht-polymere Verbindung, wobei der des Brönsted-sauren Katalysator eine berechnete Molmasse von ≤ 1200 g/mol, bevorzugt von ≤ 1000 g/mol und besonders bevorzugt von ≤ 850 g/mol aufweist.

In einer Ausführungsform des erfindungsgemäßen Verfahrens weist der Brönsted-saure Katalysator (A) einen pKs Wert von kleiner gleich 1, bevorzugt von kleiner gleich 0 auf.

In einer Ausführungsform des erfindungsgemäßen Verfahrens ist der Brönsted-saure Katalysator eine oder mehrere Verbindungen und wird ausgewählt aus der Gruppe bestehend aus aliphatischen fluorierten Sulfonsäuren, aromatischen fluorierten Sulfonsäuren, Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Paratoluolsulfonsäure, aromatische Sulfonsäuren und aliphatische Sulfonsäuren, bevorzugt aus Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluoran-timonsäure, Pentacyanocyclopentadien, Pikrinsäure, Schwefelsäure, Salpetersäure, Trifluor¬essig¬säure, Methansulfonsäure, Paratoluolsulfonsäure, Methansulfonsäure und Paratoluolsulfonsäure besonders bevorzugt aus Trifluoromethansulfonsäure, Perchlorsäure, Chlorwasserstoffsäure, Bromwasserstoffsäure, Jodwasserstoffsäure, Bis(trifluoromethan)-sulfonimid, Pentacyanocyclopentadien, Schwefelsäure, Salpetersäure und Trifluoressigsäure.

In einer Ausführungsform des erfindungsgemäßen Verfahrens wird der Brönsted-saure Katalysator in einer Menge von 0,001 mol-% bis 0,5 mol-% bevorzugt von 0,003 bis 0,4 mol-% und besonders bevorzugt von 0,005 bis 0,3 mol-% bezogen auf die Menge an Lacton eingesetzt.

In einer Ausführungsform des erfindungsgemäßen Verfahrens in Schritt ii) ist der Katalysator (B) ein tertiäres Amin (B), ein Doppelmetallcyanid (DMC)-Katalysator (B) oder ein Brönsted-saurer Katalysator (B) bevorzugt ein Doppelmetallcyanid (DMC)-Katalysator (B).

In einer Ausführungsform des erfindungsgemäßen Verfahrens in Schritt ii) ist der der Katalysator (B) ein tertiäres Amin (B), wobei das tertiäres Amin (B) die identische erfindungsgemäße Definition wie das tertiäres Amin (A) aus Schritt i) aufweist.

In einer alternativen Ausführungsform des erfindungsgemäßen Verfahrens ist der der Katalysator (B) ein Doppelmetallcyanid (DMC) - Katalysator (B), wobei der Doppelmetallcyanid (DMC) - Katalysator (B) die identische erfindungsgemäße Definition wie der Doppelmetallcyanid (DMC) - Katalysator (A) aufweist.

In einer Ausführungsform des erfindungsgemäßen Verfahrens umfasst der Doppelmetallcyanid (DMC) - Katalysator (B) einen organischen Komplexliganden, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

In einer weiteren alternativen Ausführungsform des erfindungsgemäßen Verfahrens ist der Katalysator (B) ein Brönsted-saurer Katalysator (B), wobei der Brönsted-saurer Katalysator (B) die identische erfindungsgemäße Definition wie der Brönsted-saurer Katalysator (A) aufweist.

In einer Ausführungsform des erfindungsgemäßen Verfahrens ist der Katalysator (A) bevorzugt der Doppelmetallcyanid (DMC)-Katalysator (A) identisch mit dem Katalysator (B) bevorzugt dem Doppelmetallcyanid (DMC)-Katalysator (B) und wird in Schritt i) zugegeben. Dies ist vorteilhaft, da während des Prozesses kein zusätzlicher Katalysator, bevorzugt Doppelmetallcyanid (DMC)-Katalysator zugegeben werden muss oder ein in Schritt i) verwendeter Katalysator neutralisiert, inhibiert und/oder abgetrennt werden muss. Der Katalysator kann auch, aber nicht bevorzugt das Amin oder der Brönsted-saure Katalysator sein.

In einer Ausführungsform des erfindungsgemäßen Verfahrens kann in Schritt i) und/oder Schritt ii) erfindungsgemäßen Verfahren ein Lösungsmittel verwendet werden.

Gemäß der gängigen fachlichen Definition ist unter einem Lösungsmittel eine oder mehrere Verbindungen zu verstehen, die das Lacton, den Polyester oder die H-funktionelle Starterverbindung und/oder den Katalysator lösen ohne jedoch selbst mit dem Lacton, der H-funktionellen Starterverbindung und/oder dem Katalysator zu reagieren.

Geeignete Lösungsmittel sind aprotische Lösungsmittel wie beispielsweise Toluol, Benzol, Tetrahydrofuran, Dimethylether und Diethylether.

In einer alternativen Ausführungsform wird das erfindungsgemäße Verfahren ohne Zusatz eines Lösungsmittels durchgeführt, so dass dieses nach der Herstellung des Polyesters nicht in einem zusätzlichen Verfahrensschritt abgetrennt werden muss.

Im erfindungsgemäßen Verfahren erfolgt in Schritt ii) das Umsetzen des Polyesters aus Schritt i) mit Alkylenoxiden in Gegenwart eines Katalysators (B).

In dem erfindungsgemäßen Verfahren können als Alkylenoxide Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, insbesondere Propylenoxid eingesetzt werden. Werden Ethylenoxid und Propylenoxid in Mischung eingesetzt, so beträgt das molare Verhältnis EO/PO 1:99 bis 99:1, bevorzugt 5:95 bis 50:50. Werden Ethylenoxid und/oder Propylenoxid in Mischung mit anderen ungesättigten Alkylenoxiden eingesetzt, eingesetzt, so beträgt ihr Anteil 1 bis 40 mol-%, bevorzugt 2 bis 20 mol-%.
In einer alternativen Ausführungsform des erfindungsgemäßen Verfahrens erfolgt in Schritt ii) das Umsetzen des Polyesters aus Schritt i) mit Alkylenoxiden und einem Co-Monomer in Gegenwart des Katalysators (B), wobei beispielsweise das Co-Monomer Kohlenstoffdioxid ist und der Katalysator (B) der Doppelmetallcyanid (DMC)-Katalysator (B) unter Bildung eines Polyester-Polyethercarbonatpolyol-Blockcopolymers.

In einer Ausführungsform des erfindungsgemäßen Verfahrens wird die Umsetzung der H-funktionellen Startersubstanz mit dem Lacton in Gegenwart des Katalysators (A), bevorzugt des Brönsted-sauren Katalysators (A) in Schritt i) bei Temperaturen von 20 bis 150°C, bevorzugt von 20 bis 100°C. Unterhalb von 20 °C findet keine oder nur unwesentliche Umsetzung zum erfindungsgemäßen Produkt statt und oberhalb von 150 °C erfolgen die Zersetzung des gebildeten Polyesters und/oder ungewollte Neben- oder Folgereaktionen.

In einer alternativen Ausführungsform des erfindungsgemäßen Verfahrens wird die Umsetzung der H-funktionellen Startersubstanz mit dem Lacton in Gegenwart des Doppelmetallcyanid (DMC)-Katalysators (A) in Schritt i) bei Temperaturen von 70 bis 150°C, bevorzugt von 90 bis 130°C. Unterhalb von 70 °C findet keine oder nur unwesentliche Umsetzung zum erfindungsgemäßen Produkt statt und oberhalb von 150 °C erfolgen die Zersetzung des gebildeten Polyesters und/oder ungewollte Parallel- oder Folgereaktionen.

In einer Ausführungsform umfasst das erfindungsgemäße Verfahren für Schritt i) folgende Schritte:
i-1) Vorlegen der H-funktionellen Startersubstanz und optional des Katalysators unter Bildung einer Mischung i)
i-2) Zugabe des Lactons zur Mischung i).

In einer Ausführungsform des erfindungsgemäßen Verfahrens wird das Lacton in Schritt i-2) kontinuierlich oder stufenweise zu der H-funktionellen Startersubstanz zugegeben und zum Polyester umgesetzt (semi-batch Modus).

Im erfindungsgemäßen Verfahren ist unter einer kontinuierlichen Zugabe des Lactons ein Volumenstrom des Lactons von > 0 mL/min zu verstehen, wobei der Volumenstrom während dieses Schrittes konstant sein kann oder variiert (kontinuierliche Lactonzugabe).

In einer alternativen Ausführungsform des erfindungsgemäßen Verfahrens wird das Lacton in Schritt i-2) stufenweise zur Mischung i) zugegeben und anschließend zum Polyester umgesetzt (stufenweise Lactonzugabe).

Im erfindungsgemäßen Verfahren ist unter einer stufenweisen Zugabe des Lactons mindestens die Zugabe der gesamten Lactonmenge in zwei oder mehr diskreten Portionen des Lactons zu verstehen, wobei der Volumenstrom des Lactons zwischen den oder mehr diskreten Portionen 0 mL/min beträgt und wobei der Volumenstrom des Lactons während einer diskreten Portion konstant sein kann oder variiert aber > 0 mL/min ist.

In einer alternativen Ausführungsform umfasst Schritt i) des erfindungsgemäßen Verfahrens folgende Schritte:
(i-a) Vorlegen der H-funktionellen Startersubstanz, des Lactons und optional des Katalysators unter Bildung einer Mischung (a)
(i-b) Umsetzung der Mischung (a) zum Polyester
was einer batch-weise Verfahrensführung entspricht.

In einer weiteren alternativen Ausführungsform umfasst Schritt i) des erfindungsgemäßen Verfahrens folgende Schritte:
i-1) Vorlegen des Katalysators
i-2) Zugabe des Lactons und der H-funktionellen Startersubstanz zu dem Katalysator.

Hierbei können das Lacton und die H-funktionelle Startersubstanz vorvermischt werden oder das Lacton und die H-funktionelle Startersubstanz werden durch separate Zuführungen in den Reaktor gegeben. Dies entspricht einer CAOS (Continuous Addition of Starter) Fahrweise.

In einer weiteren, alternativen Ausführungsform wird in Schritt i) die H-funktionelle Startersubstanz, das Lacton und der Katalysator kontinuierlich vermischt und miteinander zur Reaktion gebracht, während kontinuierlich das Polyester Produkt abgeführt wird, wobei die Reaktion beispielsweise in einem Rohrreaktor oder einem kontinuierlichen Rührkesselreaktor (engl. continous stirred tank reactor) durchgeführt wird was einem vollkontinuierlichen Herstellungsverfahren für Schritt i) des erfindungsgemäßen Verfahren des Polyesters entspricht.

In einer Ausführungsform umfasst das erfindungsgemäße Verfahren für Schritt ii) folgende Schritte:
ii-1) Vorlegen des Polyester aus Schritt i) optional enthaltend den Katalysator (A) und/oder (B)
ii-2) Zugabe des Alkylenoxids und optional eines Co-Monomers.

In einer bevorzugten Ausführungsform des erfindungsgemäßen Verfahrens wird das Alkylenoxid in Schritt ii-2) kontinuierlich oder stufenweise dem Polyester zugegeben und zum Polyester-Polyetherpolyol-Blockcopolymer umgesetzt (semi-batch Modus).

Im erfindungsgemäßen Verfahren ist unter einer kontinuierlichen Zugabe des Alkylenoxids in Schritt ii-2) ein Volumenstrom des Alkylenoxids von > 0 mL/min zu verstehen, wobei der Volumenstrom während dieses Schrittes konstant sein kann oder variiert (kontinuierliche Alkylenzugabe).

In einer alternativen Ausführungsform des erfindungsgemäßen Verfahrens wird das Alkylenoxid in Schritt ii-2) stufenweise zur Mischung i) zugegeben und anschließend zum Polyester-Polyetherpolyol-Blockcopolymer umgesetzt (stufenweise Alkylenoxidzugabe).

Im erfindungsgemäßen Verfahren ist unter einer stufenweisen Zugabe des Alkylenoxids mindestens die Zugabe der gesamten Alkylenoxidmenge in zwei oder mehr diskreten Portionen des Alkylenoxids zu verstehen, wobei der Volumenstrom des Alkylenoxids zwischen den oder mehr diskreten Portionen 0 mL/min beträgt und wobei der Volumenstrom des Alkylenoxids während einer diskreten Portion konstant sein kann oder variiert aber > 0 mL/min ist.

In einer alternativen Ausführungsform umfasst Schritt ii) des erfindungsgemäßen Verfahrens folgende Schritte:
(ii-a) Vorlegen des Polyesters aus Schritt i) und des Alkylenoxids optional enthaltend den Katalysator (A) und/oder (B) unter Bildung einer Mischung (ii-a)
(ii-b) Umsetzung der Mischung (ii-a) zum Polyester-Polyetherpolyol-Blockcopolymer
was einer batch-weise Verfahrensführung des Schrittes ii) entspricht.

In einer weiteren alternativen Ausführungsform umfasst Schritt ii) des erfindungsgemäßen Verfahrens folgende Schritte:
ii-1) Optionales Vorlegen des Katalysators (B) in einen Reaktor
ii-2) Zugabe des Polyesters aus Schritt i) optional enthaltend den Katalysator (A) in den Reaktor optional enthaltend Katalysator (B)zu dem Katalysator.

Hierbei können das Alkylenoxid und der Polyester vorvermischt werden oder das Alkylenoxid und der Polyester werden durch separate Zuführungen in den Reaktor gegeben. Dies entspricht einer CAOS (Continuous Addition of Starter) Fahrweise des Schrittes ii).

In einer weiteren, alternativen Ausführungsform wird in Schritt ii) der Polyester optional enthaltend den Katalysator (A), das Alkylenoxid und der optional der Katalysator (B) kontinuierlich vermischt und miteinander zur Reaktion gebracht, während kontinuierlich das Polyester-Polyetherpolyol-Blockcopolymer Produkt abgeführt wird, wobei die Reaktion beispielsweise in einem Rohrreaktor oder einem kontinuierlichen Rührkesselreaktor (engl. continous stirred tank reactor) durchgeführt wird was einem vollkontinuierlichen Herstellungsverfahren für Schritt ii) des erfindungsgemäßen Verfahren des Polyesters entspricht.

In einer Ausführungsform des erfindungsgemäßen Verfahrens wird Schritt ii) in einer Inertgasatmosphäre, wie beispielsweise oder Stickstoff, Argon) oder in einer Kohlenstoffdioxid Atmosphäre durchgeführt, wobei in der Kohlenstoffdioxid Atmosphäre Polyester-Polyethercarbonatpolyol-Blockcopolymere durch Einbau des CO2 gebildet werden.

In einer Ausführungsform des erfindungsgemäßen Verfahrens wird Schritt i) und ii) im gleichem Reaktor oder in verschiedenen Reaktoren, bevorzugt im gleichem Reaktor durchgeführt.

Für die Durchführung eignen sich alle dem Fachmann bekannten Reaktortypen mit geeignetn Mischorganen.

Ein weiterer Gegenstand der vorliegenden Erfindung sind Polyester erhältlich nach dem erfindungsgemäßen Verfahren.

Ein weiterer Gegenstand der vorliegenden Erfindung sind Polyester-Polyetherpolyol Blockcopolymere erhältlich nach dem erfindungsgemäßen Verfahren.

In einer Ausführungsform weist das erfindungsgemäße Polyester-Polyetherpolyol Blockcopolymer ein zahlenmittleres Molekulargewicht von 70 g/mol bis 15.000 g/mol bevorzugt von 100 g/mol bis 10.000 g/mol und besonders bevorzugt von 100 g/mol bis 5.000 g/mol auf, wobei das zahlenmittlere Molekulargewicht mittels der im Experimentalteil offenbarten Gel-Permeations-Chromatographie (GPC) bestimmt wird.

Ein weiterer Gegenstand der vorliegenden Erfindung sind Polyurethanpolymere, erhältlich aus der Reaktion eines Polyisocyanats mit einem Polyester- Polyetherpolyol Blockcopolymer erhältlich nach dem erfindungsgemäßen Verfahren sowie ein Verfahren zur Herstellung von Polyurethanpolymeren.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

In einer ersten Ausführungsform betrifft die Erfindung ein Verfahren zur Herstellung eines Polyester-Polyetherpolyol-Blockcopolymers, umfassend folgende Schritte:
i) Umsetzen einer H-funktionellen Startersubstanz mit Lacton zu einem Polyester
ii) Umsetzen des Polyesters aus Schritt i) mit Alkylenoxiden in Gegenwart eines Katalysators (B).

In einer zweiten Ausführungsform betrifft die Erfindung ein Verfahren gemäß der ersten Ausführungsform, wobei Schritt i) in Gegenwart des Katalysators (A) durchgeführt wird.

In einer dritten Ausführungsform betrifft die Erfindung ein Verfahren gemäß der zweiten Ausführungsform, wobei der Katalysator (A) ein Amin (A), ein Doppelmetallcyanid (DMC)-Katalysator (A) oder ein Brönsted-saurer Katalysator (A) bevorzugt ein Doppelmetallcyanid (DMC)-Katalysator (A) ist.

In einer vierten Ausführungsform betrifft die Erfindung ein Verfahren der dritten Ausführungsform, wobei der Katalysator (A) ein Doppelmetallcyanid (DMC) - Katalysator (A) ist und der Doppelmetallcyanid (DMC) - Katalysator (A) einen organischen Komplexliganden umfasst, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

In einer fünften Ausführungsform betrifft die Erfindung ein Verfahren gemäß einer der ersten bis vierten Ausführungsform, wobei die H-funktionelle Startersubstanz eine H-funktionelle Starterverbindung mit einer oder mehreren freien Carboxygruppe(n) und/oder funktionelle Starterverbindung mit einer oder mehreren freien Hydroxylgruppe(n) bevorzugt eine H-funktionelle Starterverbindung mit einer oder mehreren freien Carboxygruppe(n) umfasst.

In einer sechsten Ausführungsform betrifft die Erfindung ein Verfahren gemäß der fünften Ausführungsform, wobei die H-funktionelle Startersubstanz eine H-funktionelle Starterverbindung mit einer oder mehreren freien Carboxygruppe(n) ist und die H-funktionelle Starterverbindung mit einer oder mehreren freien Carboxygruppe(n) eine oder mehrere Verbindung(en) ist und ausgewählt wird aus der Gruppe bestehend aus die H-funktionelle Startersubstanz mit einer oder mehreren freien Carboxygruppe(n) eine oder mehrere Verbindung(en) und wird ausgewählt aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

In einer siebten Ausführungsform betrifft die Erfindung ein Verfahren gemäß der sechsten Ausführungsform, wobei die die H-funktionelle Starterverbindung mit einer oder mehreren freien Carboxygruppe(n) eine oder mehrere Verbindung(en) ist und ausgewählt wird aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure..

In einer achten Ausführungsform betrifft die Erfindung ein Verfahren gemäß einer der ersten bis siebten Ausführungsform, wobei das Lacton ein 4-gliedriges Lacton ist.

In einer neunten Ausführungsform betrifft die Erfindung ein Verfahren gemäß der achten Ausführungsform, wobei das 4-gliedriges Lacton eine oder mehrere Verbindungen sind ausgewählt aus der Gruppe bestehend aus Propiolacton, β-Butyrolacton, β-Isovalerolacton, β-Caprolacton, β-Isocaprolacton, β-Methyl-β-valerolacton, Diketen bevorzugt Propiolacton und β-Butyrolacton.

In einer zehnten Ausführungsform betrifft die Erfindung ein Verfahren gemäß einer der ersten bis neunten Ausführungsform, wobei wobei der Katalysator (B) ein tertiäres Amin (B), ein Doppelmetallcyanid (DMC)-Katalysator (B) oder ein Brönsted-saurer Katalysator (B) bevorzugt ein Doppelmetallcyanid (DMC)-Katalysator (B) ist.

In einer elften Ausführungsform betrifft die Erfindung ein Verfahren gemäß einer der ersten bis zehnten Ausführungsform, wobei das Alkylenoxid Ethylenoxid und/oder Propylenoxid ist.

In einer zwölften Ausführungsform betrifft die Erfindung ein Verfahren gemäß einer dritten bis achten Ausführungsform, wobei der Doppelmetallcyanid (DMC)-Katalysator (A) identisch mit dem Doppelmetallcyanid (DMC)-Katalysator (B) ist und in Schritt i) zugegeben wird.

In einer dreizehnten Ausführungsform betrifft die Erfindung ein Polyester erhältlich durch ein Verfahren gemäß einer der ersten bis neunten Ausführungsform.

In einer vierzehnten Ausführungsform betrifft die Erfindung ein Polyester- Polyetherpolyol Blockcopolymer erhältlich durch ein Verfahren gemäß einer der ersten bis zwölften Ausführungsform.

In einer fünfzehnten Ausführungsform betrifft die Erfindung ein Polyurethanpolymer, erhältlich aus der Reaktion eines Polyisocyanats mit einem Polyester-Polyetherpolyol Blockcopolymer gemäß der vierzehnten Ausführungsform.

In einer sechzehnten Ausführungsform betrifft die Erfindung ein Verfahren gemäß einem der ersten bis zwölften Ausführungsform, wobei das Verfahren ohne Zusatz eines Lösungsmittels durchgeführt wird.

### Beispiele

Die vorliegende Erfindung wird anhand der nachfolgenden Figuren und Beispiele näher erläutert, ohne jedoch darauf beschränkt zu sein.

### Verwendete Ausgangsstoffe

### cyclische Lactone

β-Propiolacton (Reinheit 98,5 %, Ferak Berlin GmbH)

### Epoxide

Propylenoxid (99,5%, Sigma Aldrich)

### H-funktionelle Startersubstanz

PPG-1000 (Propylenoxid-basierter Polyether mit gemitteltem Molekulargewicht von 1000 g/mol) Adipinsäure (Sigma-Aldrich, BioXtra, 99,5% (HPLC))

### Katalysatoren

In allen Beispielen wurde ein DMC-Katalysator verwendet wurde, der gemäß Beispiel 6 in WO 01/80994 A1 hergestellt wurde.

### Lösungsmittel

THF (Fisher Scientific GPC Grade)

### Beschreibung der Methoden:

### ¹H-NMR

Der Umsatz des Monomers wurde mittels ¹H-NMR (Firma Bruker, DPX 400, 400 MHz; Pulsprogramm zg30, Wartezeit D1: 10s, 64 Scans) bestimmt. Die Probe wurden jeweils in deuteriertem Chloroform gelöst. Die relevanten Resonanzen im ¹H-NMR (bezogen auf TMS = 0 ppm) und die Zuordnung der Flächenintegrale (A) ergeben sich wie folgt:
- Poly(hydroxypropionat) (= Polypropiolacton) mit Resonanz bei 4,38 (2H) und 2,66 (2H)
- β-Propiolacton mit Resonanz bei 4,28 (2H) und 3,54 (2H)
- Poly(propylenoxid) mit Resonanz bei 3,60-3,20 (3H) und 1,12 (3H)
- Propylenoxid mit Resonanz bei 2,98 (1H), 2,75 (1H), 2,43 (1H) und 1,32 (3H)

Der Umsatz des jeweiligen Monomers wird bestimmt als Integral eines geeigneten Polymersignals geteilt durch die Summe eines geeigneten Polymersignal und Monomersignals. Alle Signale werden auf 1H referenziert.

### Thermogravimetrische Analyse

Die Analyse der Proben wurde gemäß DIN EN ISO/IEC 17025 mit einem Gerät des Typs Mettler-Toledo GmbH TGA/SDTA851e durchgeführt. Die Messung erfolgte zwischen 30 °C bis 600 °C mit einer Heizrate von 10 °C/min unter Luft (50,0 mL/min).

### Beispiel 1: Herstellung eines Polyester-Polyetherpolyol-Blockcopolymers (mit einer PET-PES-PET Blockcopolymer-Struktur) durch Blockcopolymerisation von Propiolacton und Propylenoxid mittels DMC-Katalyse

In einen 300 mL Stahlreaktor werden THF (50,0 g), DMC Katalysator (3000 ppm bezogen auf die Gesamtmasse von Starter und β-Lacton) und Adipinsäure (1,46 g, 10,0 mmol, 1,00 Äq.) vorgelegt. Der Reaktor wird mit N₂ gespült. Bei 130 °C wird anschließend β-Propiolacton (18,5 g, 257 mmol, 25,7 Äq.) kontinuierlich über 120 min in den Reaktor gefördert. Es wird 120 min bei 130 °C nachgerührt. Anschließend wird Propylenoxid (10,0 g, 172 mmol, 17,2 Äq.) kontinuierlich über 60 min in den Reaktor gefördert. Es wird 180 min bei 130 °C nachgerührt. Die Umsätze werden mittels ¹H NMR Analyse von der Reaktionslösung bestimmt. Flüchtige Komponenten werden anschließend im Vakuum entfernt. Das Copolymer wird mittels TGA-Analyse auf seine thermische Stabilität untersucht.

### Beispiel 2: Herstellung eines eines Polyester-Polyetherpolyol-Blockcopolymers (mit einer PET-PES-PET Blockcopolymer-Struktur) durch Blockcopolymerisation von Propiolacton und Propylenoxid mittels DMC-Katalyse

In einen 300 mL Stahlreaktor werden THF (50,0 g), DMC Katalysator (3000 ppm bezogen auf die Gesamtmasse von Starter und β-Lacton) und Adipinsäure (2,92 g, 20,0 mmol, 1,00 Äq.) vorgelegt. Der Reaktor wird mit N₂ gespült. Bei 130 °C wird anschließend β-Propiolacton (17,1 g, 237 mmol, 11,9 Äq.) kontinuierlich über 120 min in den Reaktor gefördert. Es wird 120 min bei 130 °C nachgerührt. Anschließend wird Propylenoxid (40,0 g, 689 mmol, 34,5 Äq.) kontinuierlich über 90 min in den Reaktor gefördert. Es wird 180 min bei 130 °C nachgerührt. Die Umsätze werden mittels ¹H NMR Analyse von der Reaktionslösung bestimmt. Flüchtige Komponenten werden anschließend im Vakuum entfernt. Das Copolymer wird mittels TGA-Analyse auf seine thermische Stabilität untersucht.

### Beispiel 3 (Vergleich): Herstellung eines eines Polyester-Polyetherpolyol-Blockcopolymers (mit einer PES-PET-PES Blockcopolymer-Struktur) durch Polymerisation von Propiolacton auf einen polymeren Propylenoxid-basierten Polyether mittels DMC-Katalyse

In einen 300 mL Stahlreaktor werden THF (50,0 g), DMC Katalysator (3000 ppm bezogen auf die Gesamtmasse von Starter und β-Lacton) und PPG-1000 (10,0 g, 10,0 mmol, 1,00 Äq.) vorgelegt. Der Reaktor wird mit N₂ gespült. Bei 130 °C wird anschließend β-Propiolacton (20,0 g, 276 mmol, 27,6 Äq.) kontinuierlich über 120 min in den Reaktor gefördert. Es wird 120 min bei 130 °C nachgerührt. Die Umsätze werden mittels ¹H NMR Analyse von der Reaktionslösung bestimmt. Flüchtige Komponenten werden anschließend im Vakuum entfernt. Das Copolymer wird mittels TGA-Analyse auf seine thermische Stabilität untersucht.

**Tabelle 1: Polyetherester-Blockcopolymere aus β-Lactonen und Propylenoxid mittels DMC-Katalyse**

| Nr. | Blockstruktur^{[a]} | Lacton | Epoxid | H-fkt. Startersubstanz | Lösemittel | x(Kat) [ppm] | MW_{Target} [g/mol] | m(PET)/ m(PES) | MW [g/mol] äußerer Block | X(Lacton) [%] | X(PO) [%] |
|---|---|---|---|---|---|---|---|---|---|---|---|
| Bsp. 1 | PET-PES-PET | bPL | PO | Adipinsäure | THF | 3000 | 3000 | 0,5 | PET: 500 | 100 | 100 |
| Bsp. 2 | PET-PES-PET | bPL | PO | Adipinsäure | THF | 3000 | 3000 | 2 | PET: 1000 | 100 | 100 |
| Bsp. 3 (Vgl.) | PES-PET-PES | bPL | - | PPG-1000 | THF | 3000 | 3000 | 0,5 | PES: 1000 | 100 | 100 |

| | | | | | | | | | | | |
|---|---|---|---|---|---|---|---|---|---|---|---|
| ^{[a]}PES: Polyester-Block (bPL-basiert), PET: Polyetherblock (PO-basiert) | | | | | | | | | | | |

**Tabelle 2: Zersetzungstemperaturen T_{d} der Polyetherester-Blockcopolymere aus β-Lactonen und Propylenoxid mittels DMC-Katalyse**

| Nr. | Blockstruktur^{[a]} | T_{d (1,0 %)} [°C]^{[b]} | T_{d (5,0 %)} [°C]^{[b]} |
|---|---|---|---|
| Bsp. 1 | PET-PES-PET | 165 | 245 |
| Bsp. 2 | PET-PES-PET | 167 | 234 |
| Bsp. 3 (Vgl.) | PES-PET-PES | 122 | 191 |

| | | | |
|---|---|---|---|
| ^{[a]}PES: Polyester-Block (bPL-basiert), PET: Polyetherblock (PO-basiert); ^{[b]}mittels TGA ermittelte Temperatur bei 1 % bzw. 5% Massenverlust | | | |

## Patentansprüche

1. Verfahren zur Herstellung eines Polyester-Polyetherpolyol-Blockcopolymers, umfassend folgende Schritte:
i) Umsetzen einer H-funktionellen Startersubstanz mit Lacton zu einem Polyester
ii) Umsetzen des Polyesters aus Schritt i) mit Alkylenoxiden in Gegenwart eines Katalysators (B).

2. Verfahren gemäß Anspruch 1, wobei Schritt i) in Gegenwart des Katalysators (A) durchgeführt wird.

3. Verfahren gemäß Anspruch 2, wobei der Katalysator (A) ein Amin (A), ein Doppelmetallcyanid (DMC)-Katalysator (A) oder ein Brönsted-saurer Katalysator (A) bevorzugt ein Doppelmetallcyanid (DMC)-Katalysator (A) ist.

4. Verfahren gemäß Anspruch 3, wobei der Katalysator (A) ein Doppelmetallcyanid (DMC) - Katalysator (A) ist und der Doppelmetallcyanid (DMC) - Katalysator (A) einen organischen Komplexliganden umfasst, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

5. Verfahren gemäß einem der Ansprüche 1 bis 4, wobei die H-funktionelle Startersubstanz eine H-funktionelle Starterverbindung mit einer oder mehreren freien Carboxygruppe(n) und/oder funktionelle Starterverbindung mit einer oder mehreren freien Hydroxylgruppe(n) bevorzugt eine H-funktionelle Starterverbindung mit einer oder mehreren freien Carboxygruppe(n) umfasst.

6. Verfahren gemäß Anspruch 5, wobei die H-funktionelle Startersubstanz eine H-funktionelle Starterverbindung mit einer oder mehreren freien Carboxygruppe(n) ist und die H-funktionelle Starterverbindung mit einer oder mehreren freien Carboxygruppe(n) eine oder mehrere Verbindung(en) ist und ausgewählt wird aus der Gruppe bestehend aus die H-funktionelle Startersubstanz mit einer oder mehreren freien Carboxygruppe(n) eine oder mehrere Verbindung(en) und wird ausgewählt aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

7. Verfahren gemäß Anspruch 6, wobei die die H-funktionelle Starterverbindung mit einer oder mehreren freien Carboxygruppe(n) eine oder mehrere Verbindung(en) ist und ausgewählt wird aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure.

8. Verfahren gemäß einem der Ansprüche 1 bis 7, wobei das Lacton ein 4-gliedriges Lacton ist.

9. Verfahren gemäß Anspruch 8, wobei das 4-gliedriges Lacton eine oder mehrere Verbindungen sind ausgewählt aus der Gruppe bestehend aus Propiolacton, β-Butyrolacton, β-Isovalerolacton, β-Caprolacton, β-Isocaprolacton, β-Methyl-β-valerolacton, Diketen bevorzugt Propiolacton und β-Butyrolacton.

10. Verfahren gemäß einem der Ansprüche 1 bis 9, wobei der Katalysator (B) ein tertiäres Amin (B), ein Doppelmetallcyanid (DMC)-Katalysator (B) oder ein Brönsted-saurer Katalysator (B) bevorzugt ein Doppelmetallcyanid (DMC)-Katalysator (B) ist.

11. Verfahren gemäß einem der Ansprüche 1 bis 10, wobei das Alkylenoxid Ethylenoxid und/oder Propylenoxid ist.

12. Verfahren gemäß einem der Ansprüche 3 bis 11, wobei der Doppelmetallcyanid (DMC)-Katalysator (A) identisch mit dem Doppelmetallcyanid (DMC)-Katalysator (B) ist und in Schritt i) zugegeben wird.

13. Polyester erhältlich durch ein Verfahren gemäß einem der Ansprüche 1 bis 9.

14. Polyester- Polyetherpolyol Blockcopolymer erhältlich durch ein Verfahren gemäß einem der Ansprüche 1 bis 12.

15. Polyurethanpolymer, erhältlich aus der Reaktion eines Polyisocyanats mit einem Polyester-Polyetherpolyol Blockcopolymer gemäß Anspruch 14.
